# EUROPÄISCHE PATENTSCHRIFT

(11) **EP 1 331 121 B1**
(45) Veröffentlichungstag und Bekanntmachung des Hinweises auf die Patenterteilung: **09.05.2007**
(21) Anmeldenummer: 02028203.4
(22) Anmeldetag: 14.12.2002
(51) Int. Cl.: B60J 7/06

(54) **Verstellvorrichtung für ein Faltdach eines Fahrzeugs**
Adjustment device for a foldable roof of a vehicle
Dispositif de réglage pour un toit pliant d'un véhicule

(30) Priorität: 27.01.2002 DE 10203204
(43) Veröffentlichungstag der Anmeldung: 30.07.2003
(73) Patentinhaber: Webasto Vehicle Systems International GmbH, 82131 Stockdorf (DE)
(72) Erfinder: Dietl, Rudolf, 81247 München (DE)
(74) Vertreter: Konnerth, Dieter Hans

(56) Entgegenhaltungen:
- DE-C- 19 943 769
- US-A- 4 830 428

## Beschreibung

Die Erfindung betrifft eine Verstellvorrichtung zum Öffnen und Schließen eines Faltdaches eines Fahrzeugs mit einem an einer ersten dachseitigen Führungsbahn verschiebbar gelagerten Lagerschlitten, der mit einem bewegbaren Dachteil des Faltdachs verbunden ist, und mit einer Antriebseinrichtung, die mittels eines an einer zweiten dachseitigen Führungsbahn gelagerten Antriebsschlittens und einer von einer Steuerkulisse gesteuerten und einen Kniehebel aufweisenden Lenkeranordnung mit dem Lagerschlitten verbunden ist, wobei auf dem letzten Schließweg die Lenkeranordnung eine Untersetzung der Antriebsbewegung des Antriebsschlittens ausführt.

Die EP 0 755 815 A1 zeigt ein Faltdach mit einer derartigen Verstellvorrichtung, bei der ein entlang einer Führungsbahn verschiebbar geführter Antriebsschlitten über einen Kniehebel mit einem Spriegelträger eines Endspriegels des Faltdaches gekoppelt ist. Ein Endabschnitt der Führungsbahn verschwenkt den Kniehebel gegenüber dem Antriebsschlitten bei Annäherung an die Schließstellung. Die Verschwenkung des Kniehebels bewirkt eine Untersetzung der Antriebsbewegung des Antriebsschlittens. Am Endspriegel angreifende Luftkräfte können bei geschlossenem Faltdach über den Kniehebel auf den Antriebsschlitten und damit auf den Antriebsmotor übertragen werden.

Aufgabe der Erfindung ist es, eine eingangs genannte Verriegelungsvorrichtung zu schaffen, mit der bei einfachem Aufbau das Faltdach funktionssicher verschlossen werden kann, wobei insbesondere in Schließstellung Reaktionskräfte auf den Antrieb vermieden werden sollen.

Diese Aufgabe wird bei der oben genannten Verriegelungsvorrichtung erfindungsgemäß dadurch gelöst, daß der Kniehebel der Lenkeranordnung, der mit einem Schwenkarm des Lagerschlittens schwenkbar verbunden ist, entlang der Steuerkulisse in seine Schließstellung bewegbar ist, in der er selbsthemmend bezüglich einer am Lagerschlitten über das Dachteil wirkenden Öffnungskraft angeordnet ist. Auf diese Weise wird vermieden, daß im Fahrbetrieb am Faltdach wirkende Luftkräfte, die das Dachteil aus seiner Schließstellung am Windlauf in Öffnungsrichtung belasten, auf den Antriebsschlitten und damit z. B. über ein Antriebskabel auf die Antriebseinrichtung, wie z. B. einen elektrischen Antriebsmotor, wirken können. Durch die Anbindung des Kniehebels an den Lagerschlitten über den Schwenkhebel kann der Kniehebel in oder an der Führungsbahn des Antriebsschlittens platzsparend aufgenommen sein, während er über den wesentlichen Verstellweg verschoben wird. Das Ausschwenken des Kniehebels erfolgt erst bei Annäherung an die Schließstellung, wobei die Antriebskraftübertragung auf den Lagerschlitten kontinuierlich über den dabei ebenfalls verschwenkenden Schwenkarm erfolgt.

Diese Aufgabe wird bei der oben genannten Verriegelungsvorrichtung gemäß einer Weiterbildung der Erfindung auch dadurch gelöst, daß das Dachteil mittels einer Lagereinrichtung am Lagerschlitten bewegbar gelagert ist und eine Verstellbewegung der Lagereinrichtung von einer zusätzlichen Steuerkulisse gesteuert ist. Damit kann eine der Längsverschiebung überlagerte individuelle Schwenkbewegung auf das Dachteil übertragen werden, die das Dachteil beim Schließvorgang beispielsweise von oben gegen eine Dichtung am Windlauf drücken kann.

Vorteilhafte Ausgestaltungen der Erfindung sind in den weiteren Unteransprüchen angegeben.

Vorzugsweise ist der Kniehebel mittels eines Zwischenhebels schwenkbar mit dem Antriebsschlitten verbunden. Mittels des Zwischenhebels erhöhen sich die Möglichkeiten der kinematischen Verlagerung und Anordnung des Kniehebels in seinen Funktionsstellungen.

In einer bevorzugten Ausgestaltung liegt der Kniehebel in seiner Schließstellung mit einer Eingriffsfläche an der Steuerkulisse an und das Schwenkgelenk des Schwenkarms ist am Kniehebel zwischen der Eingriffsfläche und dem den Zwischenhebel lagernden Schwenkgelenk angeordnet. In dieser Sperrstellung befindet sich der Kniehebel in einer Übertotpunktstellung bezüglich des Schwenkarms und der Abstützung der Eingriffsfläche, in der er selbsthemmend gegen Kräfte wirkt, die vom Dachteil auf den Lagerschlitten und den Schwenkarm einwirken können.

Zweckmäßigerweise ist die Eingriffsfläche des Kniehebels kreisbogenförmig gebildet und die Steuerkulisse ist an der Schließposition des Kniehebels als Gegeneingriffsfläche gebildet, insbesondere ebenfalls kreisförmig.

Vorzugsweise liegt der Kniehebel in seiner Schließposition an einem Anschlag an, insbesondere an seinem der Eingriffsfläche gegenüberliegenden Hinterende. Damit ist die Schließstellung bzw. die selbsthemmende Totpunkt- oder Übertotpunktstellung klar definiert.

Ein Vorteil bezüglich des Bauraumes ergibt sich daraus, daß der Kniehebel und der Zwischenhebel an einer die Führungsbahn enthaltenden Führungsschiene über den wesentlichen Verstellweg unverschwenkbar geführt sind und lediglich bei Annäherung an die Schließstellung durch Steuerung mittels der Steuerkulisse von der Führungsbahn ausschwenken können.

Insbesondere wenn das Schwenklager des Schwenkarms am Lagerschlitten deutlich oberhalb der Führungsbahn des Antriebsschlittens angeordnet ist, sind die Kräfteverhältnisse am Lagerschlitten, dem Schwenkarm und dem Kniehebel für das Bewegungsverhalten der Verstellvorrichtung vorteilhaft.

Wenn vorzugsweise das Dachteil mittels einer Lagereinrichtung am Lagerschlitten bewegbar gelagert ist und eine Verstellbewegung der Lagereinrichtung von einer zusätzlichen Steuerkulisse gesteuert ist, kann eine der Längsverschiebung überlagerte individuelle Schwenkbewegung auf das Dachteil übertragen werden, die das Dachteil beim Schließvorgang beispielsweise von oben gegen eine Dichtung am Windlauf drücken kann.

Dazu ist es zweckmäßig, wenn die Lagereinrichtung zwei Lenker in Viergelenkanordnung enthält und einer der Lenker an der zusätzlichen Steuerkulisse geführt ist. Dieser Lenker kann zwei Eingriffselemente wie z. B. Rollen oder Gleiter aufweisen, die an der zusätzlichen Steuerkulisse geführt sind.

Die Verstellvorrichtung eignet sich grundsätzlich für alle Arten von Faltdächern, die eine Dachöffnung in einem festen Dach oder einem ablegbaren Dach verschließen können.

Nachfolgend werden Ausführungsbeispiele der Verriegelungsvorrichtung unter Bezugnahme auf die Zeichnung näher erläutert. Es zeigt:
- Fig. 1: in Seitenansicht in schematischer Darstellung ein erstes Ausführungsbeispiel einer Verstellvorrichtung mit einer Dachspitze eines Faltdaches eines Fahrzeugs in Schließstellung;
- Fig. 2: in Seitenansicht in schematischer Darstellung die in Fig. 1 dargestellte Verstellvorrichtung beim Öffnungsvorgang;
- Fig. 3: in Seitenansicht in schematischer Darstellung die gegenüber Fig. 2 weiter bewegte Verstellvorrichtung;
- Fig. 4: in Seitenansicht in schematischer Darstellung die Verstellvorrichtung nach einer weiteren Öffnungsbewegung;
- Fig. 5: in einer perspektivischen Seitenansicht eine zweite Ausführungsform der Verstellvorrichtung in einer Stellung entsprechend Fig. 2 der ersten Ausführungsform;
- Fig. 6: in einer perspektivischen Seitenansicht die zweite Ausführungsform der Verstellvorrichtung in einer Zwischenstellung beim Öffnen der Dachspitze;
- Fig. 7: in einer perspektivischen Seitenansicht die zweite Ausführungsform der Verstellvorrichtung in einer weiteren Zwischenstellung beim Öffnen der Dachspitze;
- Fig. 8: in einer Seitenansicht in schematischer Darstellung die zweite Ausführungsform der Verstellvorrichtung in Schließstellung gemäß Fig. 1;
- Fig. 9: in einer Seitenansicht in schematischer Darstellung die zweite Ausführungsform der Verstellvorrichtung in einer Stellung gemäß Fig. 6; und
- Fig. 10: in einer perspektivischen Innenansicht die zweite Ausführungsform der Verstellvorrichtung in einer Stellung gemäß Fig. 6.

Eine Verstellvorrichtung 1 zum Öffnen und Schließen eines Faltdaches 2 eines Fahrzeugs, z. B. eines Cabriolets, enthält einen Lagerschlitten 3, der an einer Führungsbahn 4 einer Führungsschiene 5 verschiebbar gelagert ist, die an einem seitlichen Dachlängsholm (nicht dargestellt) des Fahrzeugs angebracht ist. Der Dachlängsholm ist beispielsweise Bestandteil eines festen Dachrahmens eines Fahrzeugdaches mit einer Dachöffnung, die von dem Faltdach 2 wahlweise zu verschließen oder zumindest teilweise zu öffnen ist, oder er ist Bestandteil eines aus einer Schließstellung über einem Fahrzeuginnenraum in eine Offenstellung verstellbaren und in eine rückseitige Ablagestellung überführbaren Daches, bei dem die seitlichen Dachholme z. B. einschwenkbar und mit dem Dach in einen heckseitigen Verdeckkasten ablegbar sind.

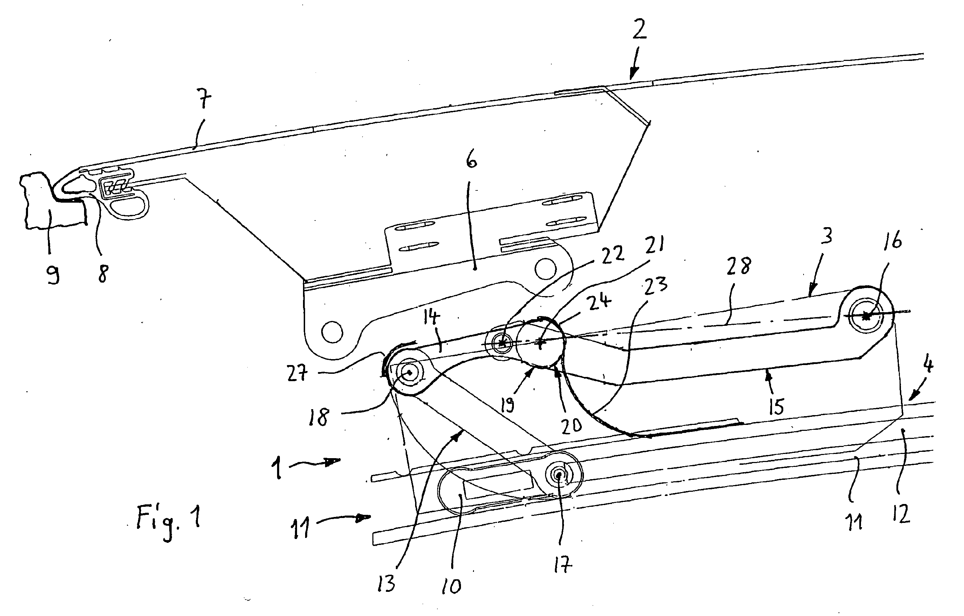

Der Lagerschlitten 3 ist mit einer Lagerplatte 6 fest verbunden (Verbindung nicht dargestellt), an der eine Dachspitze 7 des Faltverdecks 2 fest angebracht ist. Die Dachspitze 7 ist ein vorderes starres Element des Faltverdecks 2 und enthält an ihrem Vorderrand eine Dichtung 8, die im Schließzustand des Faltverdecks 2 (Fig. 1) an einem Windlauf 9 oberhalb einer Frontscheibe des Fahrzeugs dicht anliegt.

Die Verstellvorrichtung 1 enthält des weiteren einen Antriebsschlitten 10, der an einer zweiten Führungsbahn 11 verschiebbar geführt und mit einem Antriebskabel 12 verbunden ist, das z. B. von einem Elektro-Antriebsmotor in bekannter Weise in Öffnungs- und in Schließrichtung antreibbar ist. Die zweite Führungsbahn 11 ist ebenfalls an der Führungsschiene 5 für den Lagerschlitten 3 gebildet bzw. angebracht oder sie ist an einer zusätzlichen Führungsschiene vorgesehen.

Eine einen Zwischenhebel 13 und einen Kniehebel 14 aufweisende Lenkeranordnung verbindet den Antriebsschlitten 10 mit einem Schwenkarm 15, der an dem Lagerschlitten 3 in einem Schwenkgelenk 16 angelenkt ist. Der Zwischenhebel 13 ist einerseits an dem Antriebsschlitten 10 mittels eines Schwenkgelenks 17 angelenkt und andererseits mit dem Kniehebel 14 mittels eines Schwenkgelenks 18 gelenkig verbunden. Das dem Schwenkgelenk 18 gegenüberliegende Ende 19 des Kniehebels 14 ist scheibenförmig gebildet und enthält eine äußere Eingriffsfläche 20, die auf einem Kreisabschnitt mit dem Mittelpunkt 21 liegt.

Die Verbindung des Schwenkarms 15 mit dem Kniehebel 14 bildet ein Schwenkgelenk 22, das am Kniehebel 14 zwischen dem Mittelpunkt 21 am Eingriffsende 19 und dem gegenüberliegenden Schwenkgelenk 18 angeordnet ist.

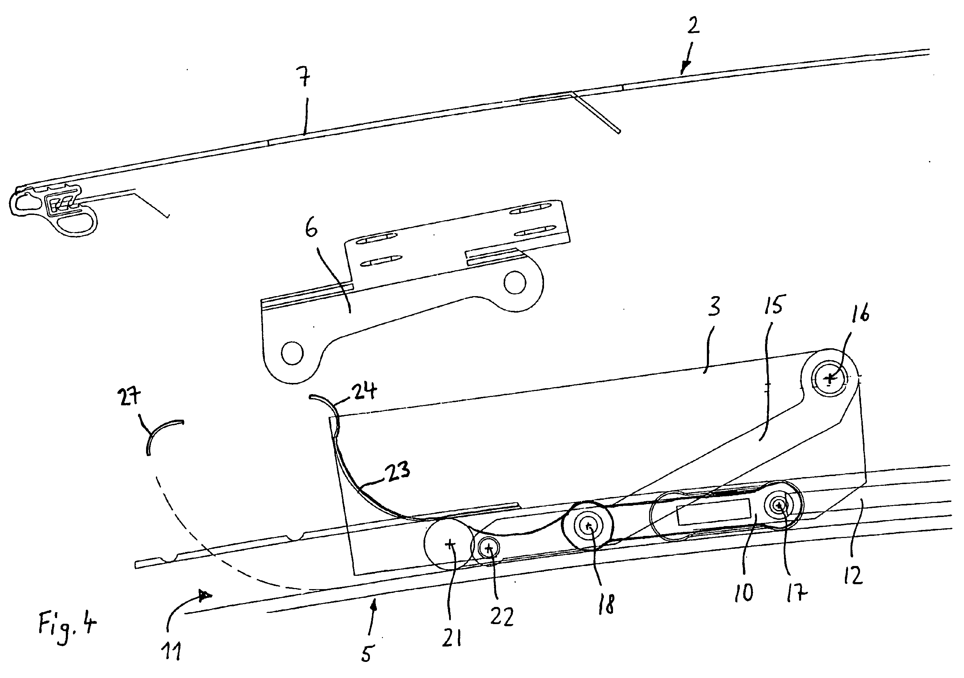

Der Zwischenhebel 13 und der Kniehebel 14 sind derart gestaltet, daß sie in der zweiten Führungsbahn 11 zusammen mit dem Antriebsschlitten 10 in Längsausrichtung aufgenommen sind (siehe Fig. 4) und nicht ausschwenken können, wenn sie von dem Antriebsschlitten 10 bei der Öffnungs- oder Schließbewegung entlang der Führungsschiene 5 angetrieben werden. Dadurch ist der Lagerschlitten 3 über den Schwenkarm 15, den Kniehebel 14 und den Zwischenhebel 13 in Öffnungs- und in Schließrichtung an den Antriebsschlitten 10 starr angekoppelt.

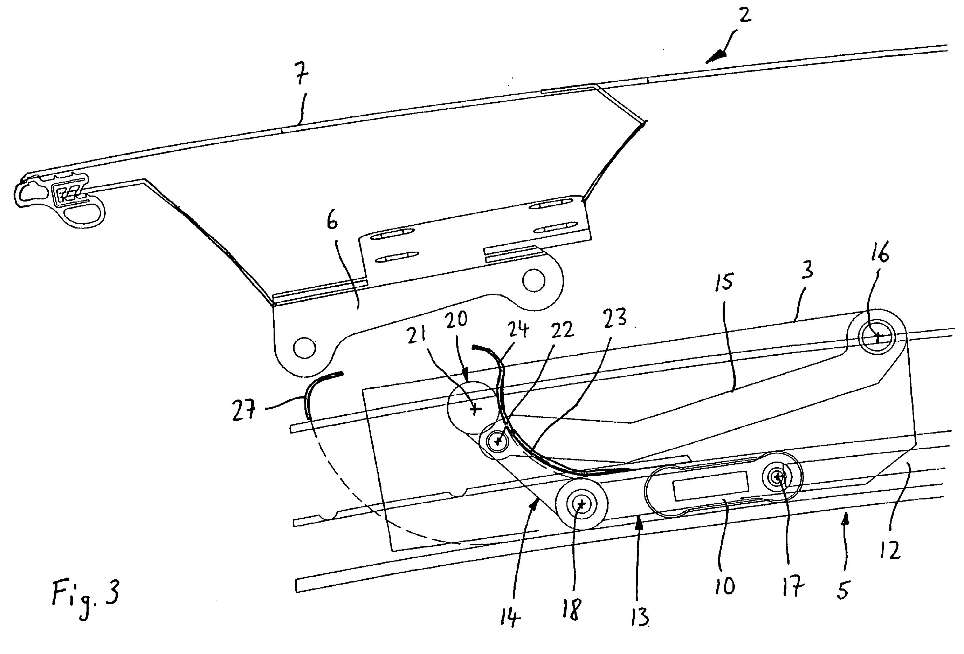

Am Vorderende der Führungsschiene 5 ist die zweite Führungsbahn 11 derart nach oben hin geöffnet, daß bei einer Vorwärtsverschiebung des Antriebsschlittens 10 (Bewegung von Fig. 4 nach Fig. 3) zunächst der Kniehebel 14 mit seinem Eingriffsende 19 nach oben austritt und dabei mit seiner Eingriffsfläche 20 an einer kurvenförmigen Steuerkulisse 23 entlang gleitet. Das nach oben gerichtete Ausschwenken des Kniehebels 14 erfolgt aufgrund der nach vorne gerichteten Druckkraft, die über den Antriebsschlitten 10 auf den Kniehebel 14 eingeleitet wird, und der nach hinten gerichteten Gegenkraft, die von der Verdeckspannung auf den Lagerschlitten 3 und damit über das Schwenkgelenk 16 und den Schwenkarm 15 auf das Schwenkgelenk 22 am Kniehebel 14 eingeleitet wird. Durch den vertikalen Abstand zwischen dem Schwenkgelenk 16 am Lagerschlitten 3 und der Führungsbahn 11 bzw. dem Schwenkgelenk 22 am Kniehebel 14 ergibt sich im Schwenkgelenk 22 eine nach oben gerichtete Reaktionskraft, die den Kniehebel 14 nach oben ausschwenkt und an der Steuerkulisse 23 entlang führt. Bei gleichbleibender Bewegung des Antriebsschlittens 10 führt das Ausschwenken des Kniehebels 14 und folglich des Schwenkarms 15 zu einer Reduzierung der Vorschubbewegung des Lagerschlittens 3 im Verhältnis zum Antriebsschlitten 10. Diese Bewegungsuntersetzung stellt gleichzeitig eine Kraftübersetzung dar.

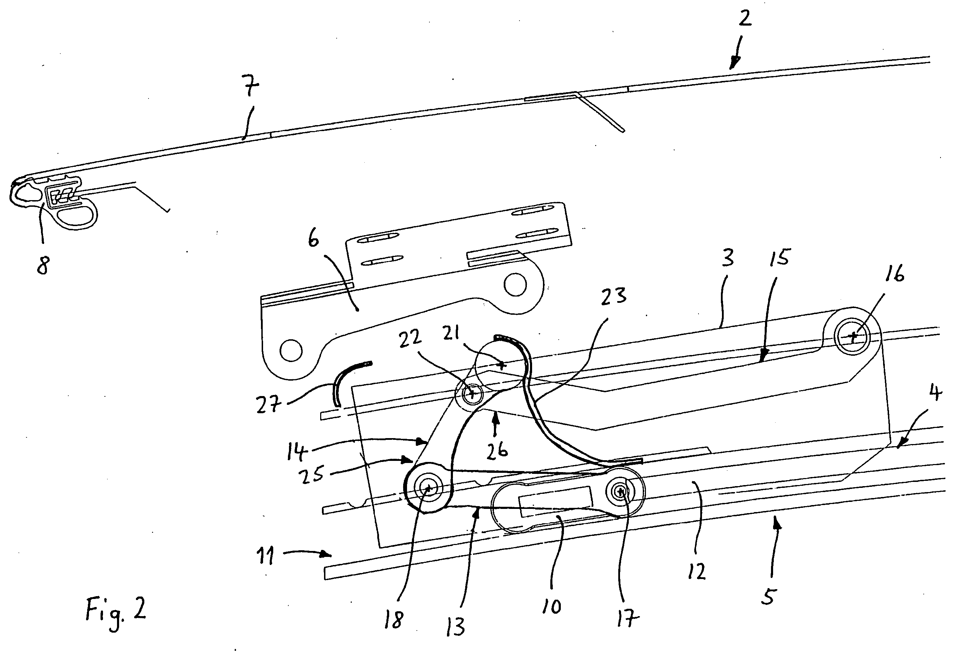

Der verschwenkende Kniehebel 14 bewegt sich mit seinem Eingriffsende 19 bis an eine kreisabschnittsförmige Abstützfläche 24 der Steuerkulisse 23 (Fig. 2), an der die Eingriffsfläche 20 des Kniehebels 14 gegen eine weitere Aufwärtsverlagerung zwar blockiert ist, in der Blockierstellung jedoch verschwenkbar ist. Der weiterbewegte Antriebsschlitten 10 verschwenkt nun über den sich ebenfalls aus der zweiten Führungsbahn 11 anhebenden Zwischenhebel 13 das Hinterende 25 des Kniehebels 14 um das an der Abstützfläche 24 gehaltene Eingriffsende 19 des Kniehebels 14, wobei das Vorderende 26 des Schwenkarms 15 mit dem Schwenkgelenk 22 angehoben wird und dabei jedoch nur noch eine geringe horizontale Bewegungskomponente ausführt. Der Antriebsschlitten 10 bleibt während der Schwenkbewegungen des Zwischenhebels 13 und des Kniehebels 14 in seiner Führungsbahn 11 geführt.

In der vorderen Endstellung der Verstellvorrichtung (Schließstellung gemäß Fig. 1) liegt der Kniehebel 14 und/oder der Zwischenhebel 13 im Bereich ihres gemeinsamen Schwenkgelenks 18 an einem Anschlag 27 an, der z. B. an der Führungsschienen 5 gebildet ist. Der Kniehebel 14 ist dann derart ausgerichtet, daß eine Verbindungsgerade 28 zwischen dem Schwenkgelenk 22 am Kniehebel 14 und dem Schwenkgelenk 16 des Schwenkarms 15 am Lagerschlitten 3 oberhalb des Mittelpunktes 21 angeordnet ist. Damit wird eine Selbsthemmung erzielt, denn eine über den Lagerschlitten 3 nach hinten eingeleitete Kraft, z. B. eine an der Dachspitze 7 bzw. dem Faltverdeck 2 durch den Fahrtwind erzeugte und nach hinten wirkende Kraft, würde den Kniehebel 14 im Uhrzeigersinn um den Mittelpunkt 21 gemäß Fig. 1 belasten und damit fester gegen den Anschlag 27 drücken. Eine Übertragung dieser Kraft auf den Antriebsschlitten 10 wird dadurch verhindert und das Antriebskabel 12 und die weitere Antriebseinrichtung wird dadurch entlastet.

Die Verstellvorrichtung 1 ermöglicht somit bei konstantem Vorschub des Antriebs und damit des Antriebskabels 12 und des Antriebsschlittens 10 eine Untersetzung der Vorschubbewegung des Lagerschlittens 3 und damit der Dachspitze 7 gegenüber dem Antriebsschlitten 10 auf dem letzten Schließweg, während gleichzeitig die Schließkraft erhöht wird.

Da der Zwischenhebel 13 und der Kniehebel 14 nur im Vorderabschnitt der Führungsschiene 5 aus der Führungsbahn 11 ausschwenken und ansonsten an oder in der Führungsbahn 11 geführt sind, ist nur ein geringer Platzbedarf für die Führungsschiene 5 mit der flachen Führungsbahn 11 erforderlich.

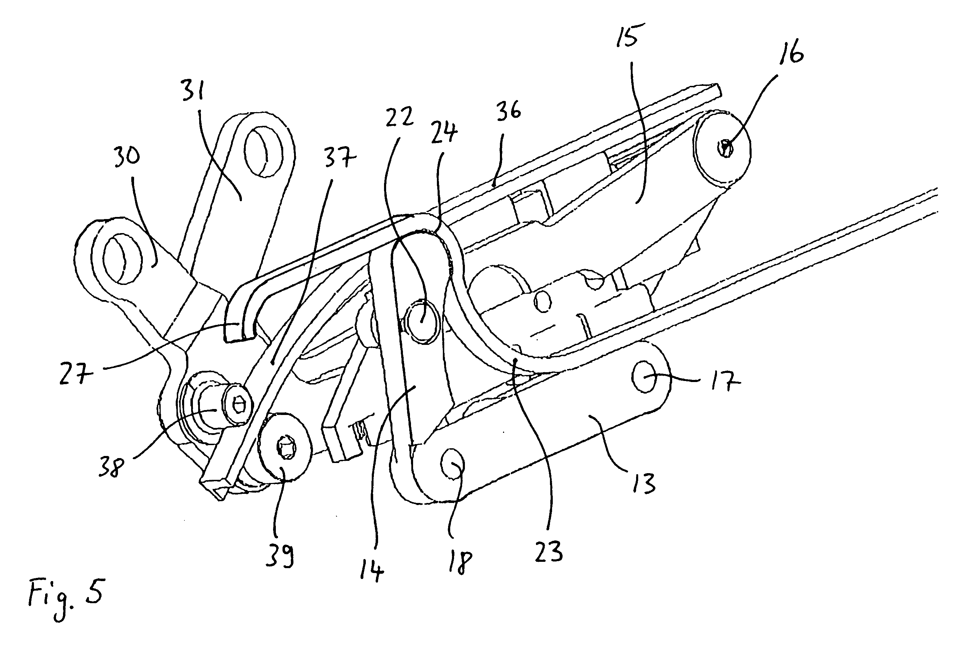

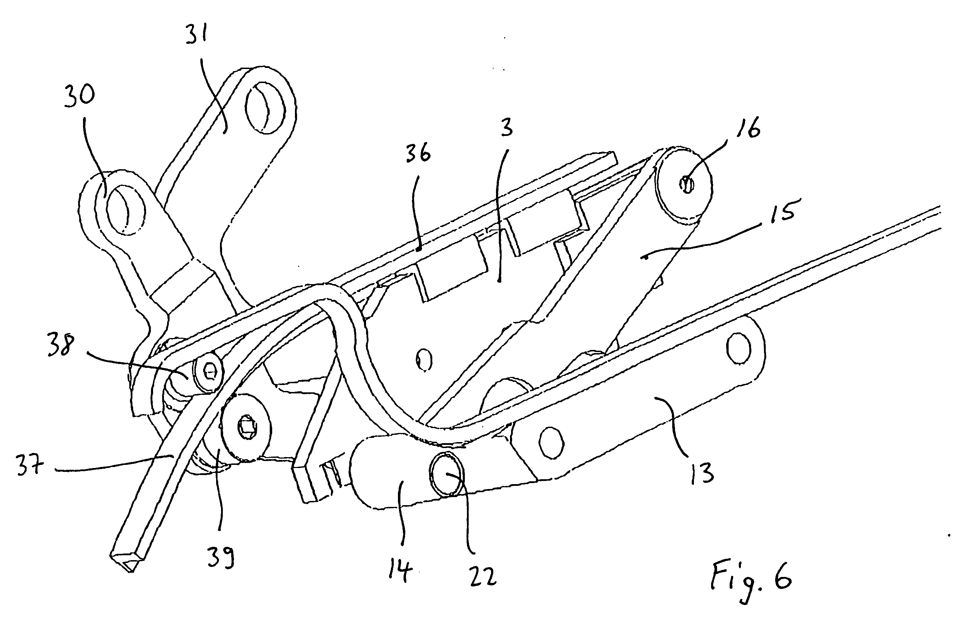

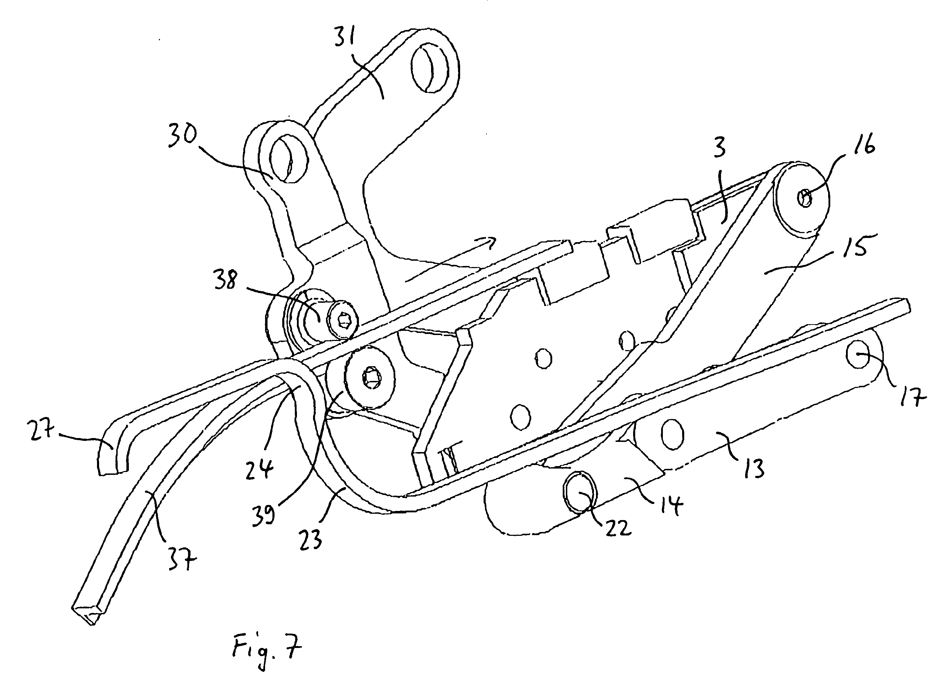

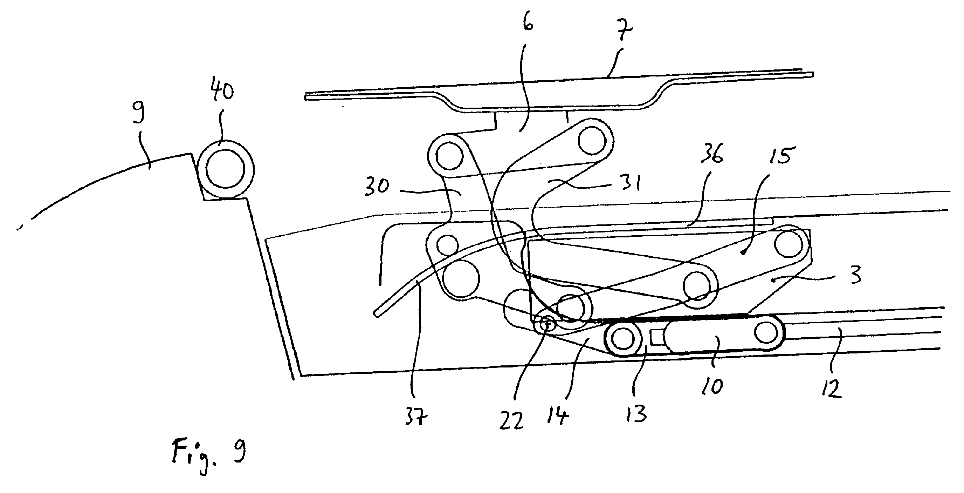

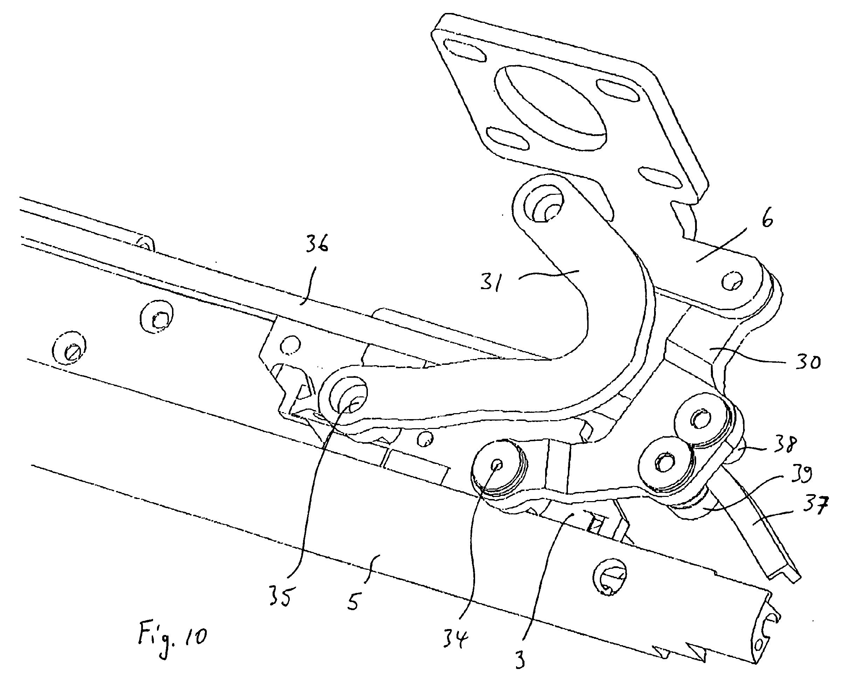

Eine abgewandelte Ausführungsform der oben beschriebenen Verstellvorrichtung (siehe Fig. 5 bis 10) enthält eine bewegbare Anbindung der Dachspitze 7 an dem Lagerschlitten 3. Dazu ist die fest mit der Dachspitze 7 verbundene Lagerplatte 6 mittels einer Viergelenkanordnung an dem Lagerschlitten 3 bewegbar gelagert. Die Viergelenkanordnung enthält einen vorderen Steuerhebel 30 und einen hinteren Lenkerhebel 31, die mittels erster Schwenkgelenke 32 bzw. 33 an der Lagerplatte 6 und mittels zweiter Schwenkgelenke 34 bzw. 35 an dem Lagerschlitten 3 bewegbar gelagert sind. An der Führungsschiene 5 ist eine zweite Steuerkulisse 36 angebracht oder ausgebildet, die über nahezu die gesamte Länge der Führungsschiene 5 parallel zu der Führungsbahn 4 des Lagerschlittens 3 verläuft, jedoch am Vorderabschnitt der Führungsschiene 5 einen sich gegen die Führungsbahn 11 annähernden gekrümmten Führungsabschnitt 37 aufweist. Der Steuerhebel 30 ist mit dieser Steuerkulisse 36 in verschiebbarem Eingriff, z. B. mittels zweier Eingriffselemente wie Gleiter oder Rollen 38 und 39, die einen Spalt zwischen sich bilden, in dem die Steuerkulisse 36 spielfrei aufgenommen ist.

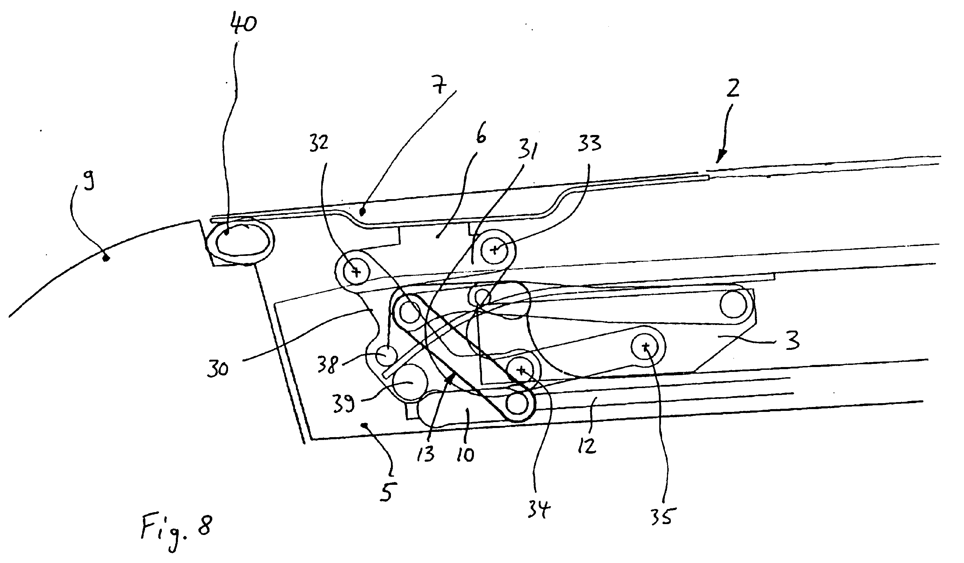

Gemäß dem dargestellten Ausführungsbeispiel ist die Viergelenkanordnung derart gewählt und ausgelegt, daß die Dachspitze 7 während dem Verschieben entlang der Führungsschiene 5 gegenüber dieser angehoben ist und am Vorderabschnitt der Führungsschiene 5 gegen die Schließstellung (siehe Fig. 8) hin abgesenkt und zusätzlich mit ihrem Vorderrand abwärts geschwenkt wird, so daß der Vorderrand von schräg oben gegen eine Dichtung 40 am Windlauf 9 gedrückt wird.

### Bezugszeichenliste

- 1: Verstellvorrichtung
- 2: Faltdach
- 3: Lagerschlitten
- 4: erste Führungsbahn
- 5: Führungsschiene
- 6: Lagerplatte
- 7: Dachspitze
- 8: Dichtung
- 9: Windlauf
- 10: Antriebsschlitten
- 11: zweite Führungsbahn
- 12: Antriebskabel
- 13: Zwischenhebel
- 14: Kniehebel
- 15: Schwenkarm
- 16: Schwenkgelenk
- 17: Schwenkgelenk
- 18: Schwenkgelenk
- 19: Ende
- 20: Eingriffsfläche
- 21: Mittelpunkt
- 22: Schwenkgelenk
- 23: Steuerkulisse
- 24: Abstützfläche
- 25: Hinterende
- 26: Vorderende
- 27: Anschlag
- 28: Verbindungsgerade
- 29 30: vorderer Steuerhebel
- 31: hinterer Lenkerhebel
- 32: Schwenkgelenk
- 33: Schwenkgelenk
- 34: Schwenkgelenk
- 35: Schwenkgelenk
- 36: zweite Steuerkulisse
- 37: Führungsabschnitt
- 38: Rolle
- 39: Rolle
- 40: Dichtung

## Patentansprüche

1. Verstellvorrichtung zum Öffnen und Schließen eines Faltdaches (2) eines Fahrzeugs mit einem an einer ersten dachseitigen Führungsbahn (4) verschiebbar gelagerten Lagerschlitten (3), der mit einem bewegbaren Dachteil des Faltdachs verbunden ist, und mit einer Antriebseinrichtung, die mittels eines an einer zweiten dachseitigen Führungsbahn (11) gelagerten Antriebsschlittens (10) und einer von einer Steuerkulisse (23) gesteuerten und einen Kniehebel (14) aufweisenden Lenkeranordnung mit dem Lagerschlitten (3) verbunden ist, wobei auf dem letzten Schließweg die Lenkeranordnung eine Untersetzung der Antriebsbewegung des Antriebsschlittens (10) ausführt,
**dadurch gekennzeichnet,**
**daß** der Kniehebel (14) der Lenkeranordnung, der mit einem Schwenkarm (15) des Lagerschlittens (3) schwenkbar verbunden ist, entlang der Steuerkulisse (23) in seine Schließstellung bewegbar ist, in der er selbsthemmend bezüglich einer am Lagerschlitten (3) über das Dachteil (7) wirkenden Öffnungskraft angeordnet ist.

2. Verstellvorrichtung nach Anspruch 1,
**dadurch gekennzeichnet,**
**daß** das Dachteil (7) mittels einer Lagereinrichtung (30, 31) am Lagerschlitten (3) bewegbar gelagert ist und eine Verstellbewegung der Lagereinrichtung (30, 31) von einer zusätzlichen Steuerkulisse (36, 37) gesteuert ist.

3. Verstellvorrichtung nach Anspruch 2,
**dadurch gekennzeichnet, daß** der Kniehebel (14) der Lenkeranordnung, der mit einem Schwenkarm (15) des Lagerschlittens (3) schwenkbar verbunden ist, entlang der Steuerkulisse (23) in seine Schließstellung bewegbar ist, in der er selbsthemmend bezüglich einer am Lagerschlitten (3) über das Dachteil (7) wirkenden Öffnungskraft angeordnet ist.

4. Verstellvorrichtung nach Anspruch 1 oder 3,
**dadurch gekennzeichnet, daß** der Kniehebel (14) mittels eines Zwischenhebels (13) schwenkbar mit dem Antriebsschlitten (10) verbunden ist.

5. Verstellvorrichtung nach einem der Ansprüche 1 bis 4,
**dadurch gekennzeichnet, daß** der Kniehebel (14) in seiner Schließstellung mit einer Eingriffsfläche (20) an der Steuerkulisse (23) anliegt und das Schwenkgelenk (22) des Schwenkarms (15) am Kniehebel (14) zwischen der Eingriffsfläche (20) und dem den Zwischenhebel (13) lagernden Schwenkgelenk (18) angeordnet ist.

6. Verstellvorrichtung nach Anspruch 5,
**dadurch gekennzeichnet, daß** die Eingriffsfläche (20) des Kniehebels (14) kreisbogenförmig gebildet ist und die Steuerkulisse (23) an der Schließposition des Kniehebels (14) als Gegeneingriffsfläche (24) gebildet ist.

7. Verstellvorrichtung nach einem der Ansprüche 1 bis 6,
**dadurch gekennzeichnet, daß** der Kniehebel (14) in seiner Schließposition an einem Anschlag (27) anliegt, insbesondere an seinem der Eingriffsfläche (20) gegenüberliegenden Hinterende (25).

8. Verstellvorrichtung nach einem der Ansprüche 4 bis 7,
**dadurch gekennzeichnet, daß** der Kniehebel (14) und der Zwischenhebel (13) an einer die Führungsbahn (11) enthaltenden Führungsschiene (5) über den wesentlichen Verstellweg unverschwenkbar geführt sind und lediglich bei Annäherung an die Schließstellung durch Steuerung mittels der Steuerkulisse (23) von der Führungsbahn (11) ausschwenken können.

9. Verstellvorrichtung nach einem der Ansprüche 1 bis 8,
**dadurch gekennzeichnet, daß** das Schwenklager (16) des Schwenkarms (15) am Lagerschlitten (3) oberhalb der Führungsbahn (11) des Antriebsschlittens (10) angeordnet ist.

10. Verstellvorrichtung nach einem der Ansprüche 1 bis 9,
**dadurch gekennzeichnet, daß** das Dachteil (7) mittels einer Lagereinrichtung (30, 31) am Lagerschlitten (3) bewegbar gelagert ist und eine Verstellbewegung der Lagereinrichtung (30, 31) von einer zusätzlichen Steuerkulisse (36, 37) gesteuert ist.

11. Verstellvorrichtung nach Anspruch 10,
**dadurch gekennzeichnet, daß** die Lagereinrichtung (30, 31) zwei Lenker (30, 31) in Viergelenkanordnung enthält und einer der Lenker (30) an der zusätzlichen Steuerkulisse (36, 37) geführt ist.

12. Verstellvorrichtung nach Anspruch 11,
**dadurch gekennzeichnet, daß** der Lenker (30) zwei Eingriffselemente (38, 39) aufweist, die an der zusätzlichen Steuerkulisse (36, 37) geführt sind.

## Claims

1. Adjustment device for opening and closing a folding roof (2) of a vehicle, having a bearing carriage (3) which is mounted such that it can be displaced on a first guide track (4) on the roof side and which is connected to a movable roof part of the folding roof, and having a drive device which, by means of a drive carriage (10) mounted on a second guide track (11) on the roof side and a link arrangement controlled by a control guide (23) and having a toggle lever (14), is connected to the bearing carriage (3), the link arrangement stepping down the drive movement of the drive carriage (10) over the last closing travel,
**characterized in that**
the toggle lever (14) of the link arrangement, which is pivotably connected to a pivoting arm (15) of the bearing carriage (3), can be moved along the control guide (23) into its closed position, in which it is arranged in a self-locking manner with respect to an opening force acting on the bearing carriage (3) via the roof part (7).

2. Adjustment device according to Claim 1, **characterized in that** the roof part (7) is mounted such that it can be moved by means of a bearing device (30, 31) on the bearing carriage (3), and an adjustment movement of the bearing device (30, 31) is controlled by an additional control guide (36, 37).

3. Adjustment device according to Claim 2, **characterized in that** the toggle lever (14) of the link arrangement, which is pivotably connected to a pivoting arm (15) of the bearing carriage (3), can be moved along the control guide (23) into its closed position, in which it is arranged in a self-locking manner with respect to an opening force acting on the bearing carriage (3) via the roof part (7).

4. Adjustment device according to Claim 1 or 3, **characterized in that** the toggle lever (14) is pivotably connected to the drive carriage (10) by means of an intermediate lever (13).

5. Adjustment device according to one of Claims 1 to 4, **characterized in that** the toggle lever (14) rests on the control guide (23) with an engagement surface (20) when in its closed position, and the pivot joint (22) of the pivoting arm (15) is arranged on the toggle lever (14) between the engagement surface (20) and the pivot joint (18) mounting the intermediate lever (13).

6. Adjustment device according to Claim 5, **characterized in that** the engagement surface (20) of the toggle lever (14) is shaped like a circular arc and the control guide (23) is formed as a mating engagement surface (24) in the closed position of the toggle lever (14).

7. Adjustment device according to one of Claims 1 to 6, **characterized in that**, in its closed position, the toggle lever (14) rests on a stop (27), in particular at its rear end (25) opposite the engagement surface (20).

8. Adjustment device according to one of Claims 4 to 7, **characterized in that** the toggle lever (14) and the intermediate lever (13) are guided on a guide rail (5) containing the guide track (11), so they cannot pivot over the substantial adjustment travel and can pivot out from the guide track (11) as a result of control by means of the control guide (23) only as they approach the closed position.

9. Adjustment device according to one of Claims 1 to 8, **characterized in that** the pivot bearing (16) of the pivoting arm (15) is arranged on the bearing carriage (3) above the guide track (11) of the drive carriage (10).

10. Adjustment device according to one of Claims 1 to 9, **characterized in that** the roof part (7) is mounted on the bearing carriage (3) by means of a bearing device (30, 31) such that it can move, and an adjustment movement of the bearing device (30, 31) is controlled by an additional control guide (36, 37).

11. Adjustment device according to Claim 10, **characterized in that** the bearing device (30, 31) contains two links (30, 31) in a four-bar arrangement and one of the links (30) is guided on the additional control guide (36, 37).

12. Adjustment device according to Claim 11, **characterized in that** the link (30) has two engagement elements (38, 39) which are guided on the additional control guide (36, 37).

## Revendications

1. Dispositif de réglage pour l'ouverture et la fermeture d'un toit pliant (2) d'un véhicule avec un chariot de logement (3) logé de manière coulissable sur une première voie de guidage (4) côté toit, chariot qui est relié à une partie de toit mobile du toit pliant, et avec un dispositif d'entraînement, qui est relié au chariot de logement (3) au moyen d'un chariot d'entraînement (10) placé sur une seconde voie de guidage (11) côté toit et une installation de guidage présentant une genouillère (14) et commandée par une coulisse de commande (23), sachant que sur le dernier parcours de fermeture, l'installation de guidage exécute une démultiplication du mouvement d'entraînement du chariot d'entraînement (10),
**caractérisé en ce que** la genouillère (14) de l'installation de guidage, qui est reliée de manière à pouvoir pivoter à un bras pivotant (15) du chariot de logement (3), est déplaçable le long de la coulisse de commande (23) dans sa position de fermeture, dans laquelle elle est disposée de manière autobloquante par rapport à une force d'ouverture agissant sur le chariot (3) par l'intermédiaire de la partie de toit (7).

2. Dispositif de réglage selon la revendication 1,
**caractérisé en ce que** la partie de toit (7) est logée de manière mobile au moyen d'un dispositif de logement (30, 31) sur le chariot de logement (3) et qu'un mouvement de réglage du dispositif de logement (30, 31) est commandé par une coulisse de commande (36, 37) supplémentaire.

3. Dispositif de réglage selon la revendication 2,
**caractérisé en ce que** la genouillère (14) de l'installation de guidage, qui est reliée de manière à pouvoir pivoter à un bras pivotant (15) du chariot de logement (3), peut se déplacer le long de la coulisse de commande (23) dans sa position de fermeture, dans laquelle elle est disposée de manière autobloquante par rapport à une force d'ouverture agissant sur le chariot (3) par l'intermédiaire de la partie de toit (7).

4. Dispositif de réglage selon la revendication 1 ou 3,
**caractérisé en ce que** la genouillère (14) est reliée au moyen d'un levier intermédiaire (13) au chariot d'entraînement (10) de manière à pouvoir pivoter.

5. Dispositif de réglage selon l'une des revendications 1 à 4,
**caractérisé en ce que** la genouillère (14) s'appuie dans sa position de fermeture contre la coulisse de commande (23) avec une surface de prise (20) et que l'articulation pivotante (22) du bras pivotant (15) est disposée sur la genouillère (14) entre la surface de prise (20) et l'articulation pivotante (18) logeant le levier intermédiaire (13).

6. Dispositif de réglage selon la revendication 5,
**caractérisé en ce que** la surface de prise (20) de la genouillère (14) est conçue en forme d'arc de cercle et la coulisse de commande (23) est conçue comme contre-surface de prise (24) en position de fermeture de la genouillère (14).

7. Dispositif de réglage selon l'une quelconque des revendications 1 à 6,
**caractérisé en ce que** la genouillère (14) s'appuie dans sa position de fermeture contre une butée (27), en particutier contre son extrémité arrière (25) située en face de la surface de prise (20).

8. Dispositif de réglage selon l'une quelconque des revendications 4 à 7,
**caractérisé en ce que** la genouillère (14) et le levier intermédiaire (13) sont guidés sans pouvoir pivoter sur un rail de guidage (5) contenant la voie de guidage (11) sur le parcours essentiel de réglage et peuvent seulement pivoter de la voie de guidage (11) lors de l'approche vers la position de fermeture par commande au moyen de la coulisse de commande (23).

9. Dispositif de réglage selon l'une quelconque des revendications 1 à 8,
**caractérisé en ce que** le palier pivotant (16) du bras pivotant (15) est disposé sur le chariot de logement (3) au-dessus de la voie de guidage (11) du chariot d'entraînement (10).

10. Dispositif de réglage selon l'une quelconque des revendications 1 à 9,
**caractérisé en ce que** la partie de toit (7) est logée de manière mobile au moyen d'un dispositif de logement (30, 31) sur le chariot de logement (3) et qu'un mouvement de réglage du dispositif de logement (30, 31) est commandé par une coulisse de commande (36, 37) supplémentaire.

11. Dispositif de réglage selon la revendication 10,
**caractérisé en ce que** le dispositif de logement (30, 31) contient deux bielles (30, 31) en agencement quadrilatéral articulé et qu'une des bielles (30) est guidée sur la coulisse de commande (36, 37) supplémentaire.

12. Dispositif de réglage selon la revendication 11,
**caractérisé en ce que** la bielle (30) présente deux éléments de prise (38, 39), qui sont guidés sur la coulisse de commande (36, 37) supplémentaire.
